# EUROPÄISCHE PATENTSCHRIFT

(11) **EP 0 530 842 B1**
(45) Veröffentlichungstag und Bekanntmachung des Hinweises auf die Patenterteilung: **14.08.1996**
(21) Anmeldenummer: 92115291.4
(22) Anmeldetag: 07.09.1992
(51) Int. Cl.: F16H 61/40, F16H 61/46

(54) **Reversierbares hydrostatisches Getriebe mit Bremsventil**
Reversible hydrostatic transmission with brake valve
Transmission réversible hydrostatique avec soupape de freinage

(30) Priorität: 06.09.1991 DE 4129667
(43) Veröffentlichungstag der Anmeldung: 10.03.1993
(73) Patentinhaber: BRUENINGHAUS HYDROMATIK GMBH, D-89275 Elchingen (DE)
(72) Erfinder: Hörmann, Werner, W-7918 Illtertissen (DE)
(74) Vertreter: Körber, Wolfhart, Dr.rer.nat.

(56) Entgegenhaltungen:
- EP-A- 0 301 918
- DE-A- 2 417 704
- US-A- 3 333 415
- US-A- 4 481 769
- US-A- 4 712 377

## Beschreibung

Die Erfindung betrifft ein hydrostatisches Getriebe mit einem Bremsventil nach dem Oberbegriff des Patentanspruches 1.

Ein derartiges hydrostatisches Getriebe ist in der Praxis, beispielsweise für den Antrieb von Baggerfahrzeugen, bekannt. Im Lastbetrieb eines solchen Baggerfahrzeuges fördert die von der Antriebsquelle angetriebene Hydropumpe je nach Fahrtrichtung über die eine oder die andere, jeweils als Vorlaufleitung dienende Arbeitsleitung zum Hydromotor, um diesen und damit die Fahrzeugräder anzutreiben. Das Bremsventil wird durch den beim Lastbetrieb in der jeweiligen Vorlaufleitung herrschenden Arbeitsdruck als Steuerdruck über eine Steuerleitung angesteuert und dadurch in einer Stellung gehalten, in der es den ungedrosselten Druckmittelrücklauf über die jeweils andere, als Rücklaufleitung dienende Arbeitsleitung ermöglicht. Der Arbeitsdruck in der Vorlaufleitung beaufschlagt weiterhin als Stelldruck über die Stelldruckleitung die Stelleinrichtung in Richtung des maximalen Verdrängungsvolumens des Hydromotors.

Beim Wechsel vom Last- zum Schubbetrieb, wenn also der Antrieb des Hydromotors nicht durch die Hydropumpe erfolgt, sondern von den Fahrzeugrädern, etwa bei Bergabfahrt, übernommen wird, fällt der Arbeitsdruck in der Vorlaufleitung ab und steht dadurch weder als Steuerdruck für das Bremsventil noch als Stelldruck für die Stelleinrichtung zur Verfügung. Das auf diese Weise hydraulisch druckentlastete Bremsventil nimmt daraufhin seine Bremsstellung ein, in der es durch Querschnittsverringerung der Rücklaufleitung den Druckmittelrücklauf drosselt und einen entsprechenden Staudruck erzeugt, der den Hydromotor und damit das Fahrzeug abbremst. Ferner wird aufgrund des fehlenden Stelldrucks der Hydromotor durch die Rückschwenkkräfte seines Triebwerks auf minimales Verdrängungsvolumen eingestellt. Dies ist insofern nachteilig, als der entsprechende, minimale Druckmittelstrom im Rücklauf einen entsprechend geringen, minimalen Stau- oder Bremsdruck im Bremsventil erzeugt.

Es ist Aufgabe der Erfindung, ein hydrostatisches Getriebe der eingangs genannten Art so weiterzubilden, daß ein größerer Bremsdruck zur Verfügung steht.

Diese Aufgabe wird durch die kennzeichnenden Merkmale des Patentanspruches 1 gelöst. Der im Bereich der Arbeitsleitungen zwischen dem Bremsventil und dem Hydromotor im Schubbetrieb erzeugte Staudruck wird erfindungsgemäß über die weitere Stelldruckleitung abgenommen und als Stelldruck verwendet, der die Stelleinrichtung in Richtung maximales Verdrängungsvolumen des Hydromotors verstellt. Dieser erzeugt einen dementsprechend größeren Druckmittelstrom, der beim Durchfluß durch das Bremsventil einen entsprechend höheren, den Hydromotor abbremsenden Staudruck in der jeweiligen Rücklaufleitung hervorruft. Dieser höhere Staudruck wirkt wiederum auf die Stelleinrichtung zurück und bewirkt ein weiteres Ausschwenken des Hydromotors, bis dieser schließlich auf sein maximales Verdrängungsvolumen eingeregelt ist und einen entsprechend hohen Bremsdruck erzeugt. Um bei diesem hohen Bremsdruck ein abruptes Einsetzen des Bremsvorganges und damit Beeinträchtigungen des Bremsverhaltens und des Fahrkomforts auszuschließen, ist die Drosseleinrichtung vorgesehen, die die Stelldruckversorgung im Schubbetrieb verzögert und somit einen zu schnellen Aufbau des Bremsdrucks und/oder ungedämpftes Durchschlagen von Bremsdruckschwankungen auf die Stelleinrichtung verhindert. Derartige Bremsdruckschwankungen werden beispielsweise durch Schwankungen der Fahrwiderstände oder der abgenommenen Leistung hervorgerufen. Ein mit dem erfindungsgemäßen hydrostatischen Getriebe ausgerüstetes Fahrzeug weist bei sanft einsetzendem Bremsvorgang eine kurze Bremsstrecke sowie ein stabiles Bremsverhalten und damit einen entsprechend hohen Fahrkomfort auf. Andererseits jedoch ist es aus Gründen der Unfallsicherheit erforderlich und durch Ausbildung der entsprechenden Stelldruckleitung ohne Drosseleinrichtung möglich, im Lastbetrieb ein sofortiges, verzögerungsfreies Ansprechen der Stelleinrichtung und damit eine entsprechend schnelle Verstellung des Verdrängungsvolumens des Hydromotors zu erreichen. Voraussetzung dafür ist die erfindungsgemäße Trennung der Stelldruckversorgung im Last- und im Schubbetrieb über die beiden Stelldruckleitungen.

Zwar ist aus der gattungsbildende US-A-4 481 769 ein hydrostatisches Getriebe mit Bremsventil bekannt, bei dem die Stelldruckversorgung der Stelleinrichtung des Hydromotors in Richtung des maximalen Verdrängungsvolumens sowohl im Schub- als auch im Lastbetrieb gewährleistet ist, jedoch lediglich über eine einzige, im Bereich zwischen dem Hydromotor und dem Bremsventil an die Arbeitsleitungen angeschlossene Stelldruckleitung. Eine für den Lastbetrieb und den Schubbetrieb getrennte Stelldruckversorgung mittels zweier Stelldruckleitungen ist nicht vorgesehen, so daß für beide Betriebsarten kein unterschiedliches Ansprechverhalten bei der Verdrängungsvolumen-Verstellung des Hydromotors möglich ist.

Die im hydrostatischen Getriebe gemäß der Erfindung für den Bremsvorgang im Schubbetrieb vorgesehene weitere, zweite Stelldruckleitung mündet vorzugsweise in die für den Lastbetrieb vorgesehene erste Stelldruckleitung ein. Um im Schubbetrieb den Stelldruck in der zweiten Stelldruckleitung und in dem sich anschließenden, zur Stelleinrichtung führenden Teil der ersten Stelldruckleitung aufrechtzuerhalten, kann ein Rückschlagventil vorgesehen sein, das in der ersten Stelldruckleitung zwischen deren Anschlüssen an die Arbeitsleitungen und der Einmündung der zweiten Stelldruckleitung angeordnet ist und in Richtung dieser Einmündung öffnet.

Vorteilhafterweise ist die Drosseleinrichtung dem Stelldruckleitungsbereich bestehend aus der zweiten Stelldruckleitung und dem Teilbereich der ersten Stelldruckleitung zwischen dem Rückschlagventil und der Stelleinrichtung zugeordnet. Die Drosseleinrichtung umfaßt vorzugsweise eine Ablaufdrossel, die in einem Ablauf der ersten Stelldruckleitung in deren Teilbereich zwischen dem Rückschlagventil und der Stelleinrichtung angeordnet ist und entsprechend ihrem Drosselquerschnitt den Druckmittelstrom und den Stelldruck für die Verstellung der Stelleinrichtung in Richtung des maximalen Verdrängungsvolumens des Hydromotors reduziert und auf diese Weise den Aufbau des Bremsdrucks entsprechend verzögert. Die Drosseleinrichtung kann ferner eine Zulaufdrossel in der zweiten Stelldruckleitung umfassen, die zum verzögerten Aufbau des Bremsdrucks beiträgt sowie ein ungedämpftes Durchschlagen von Bremsdruckschwankungen auf die Stelleinrichtung verhindert.

Weitere Merkmale und Vorteile der Erfindung ergeben sich aus den verbleibenden Unteransprüchen.

Nachstehend ist das hydrostatische Getriebe gemäß der Erfindung anhand von vier bevorzugten Ausführungsbeispielen unter Bezugnahme auf die Zeichnung näher beschrieben. Es zeigen:
- Fig. 1: einen Schaltplan eines hydrostatischen Getriebes gemäß dem ersten Ausführungsbeispiel der Erfindung,
- Fig. 2: einen Schaltplan eines hydrostatischen Getriebes gemäß dem zweiten Ausführungsbeispiel der Erfindung,
- Fig. 3: einen Schaltplan eines hydrostatischen Getriebes gemäß dem dritten Ausführungsbeispiel der Erfindung mit einem Hydromotor, dessen Verdrängungsvolumen mittels eines Stelldrucks verstellbar ist,
- Fig. 4: einen Schaltplan eines hydrostatischen Getriebes gemäß dem vierten Ausführungsbeispiel der Erfindung, und
- Fig. 5: ein Diagramm, das die Zuordnung der Verdrängungsvolumen-Einstellung des Hydromotors nach Fig. 3 und des Stelldrucks zeigt.

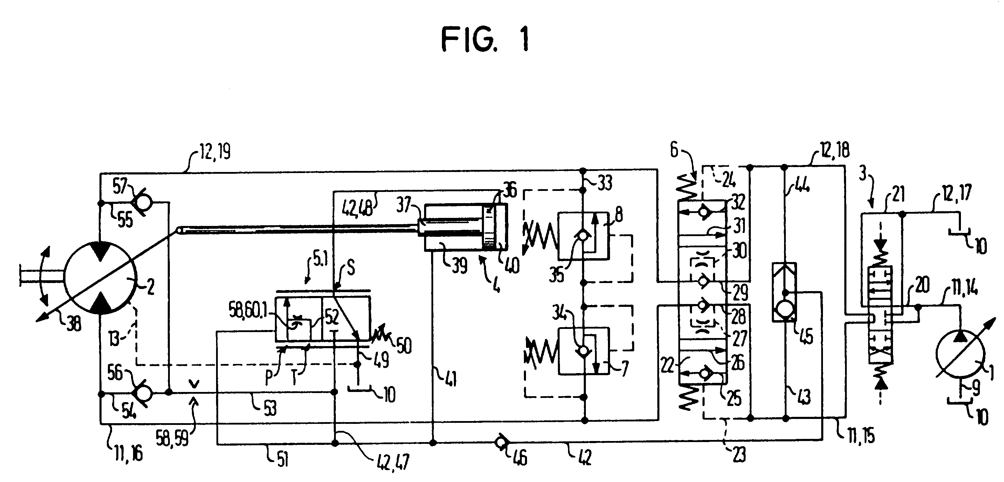

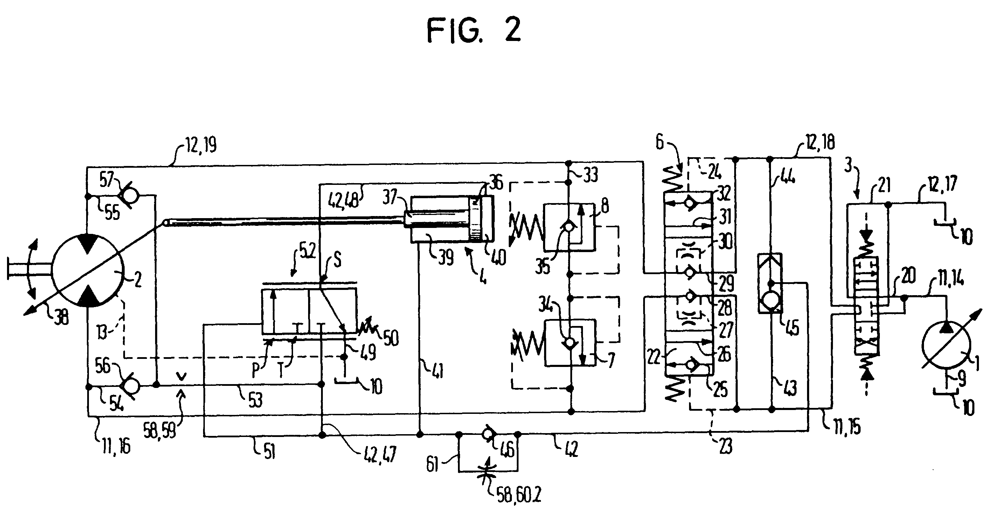

Die Zeichnung zeigt ein als Fahrantrieb für ein Fahrzeug vorgesehenes hydrostatisches Getriebe, das mit offenem Kreislauf ausgebildet ist, jedoch auch einen geschlossenen Kreislauf aufweisen kann. Es umfaßt eine verstellbare Hydropumpe 1 mit einer Förderrichtung, einen verstellbaren Hydromotor 2, ein Fahrtrichtungsventil 3 zur Umsteuerung der Drehrichtung des Hydromotors 2 und damit der Fahrtrichtung des Fahrzeuges, eine Stelleinrichtung 4 mit einem zugeordneten Regelventil 5.1 (siehe Fig. 1) bzw. 5.2 (siehe Fig. 2 bis 4) zur Verstellung des Verdrängungsvolumens des Hydromotors 2 und eine hydraulische Bremseinrichtung, die ein Bremsventil 6 und zwei zugeordnete Druckbegrenzungsventile 7,8 umfaßt.

Die Hydropumpe 1 ist über eine Saugleitung 9 an den Tank 10 angeschlossen und von einer nicht dargestellten Antriebsquelle, z.B. einem Dieselmotor, antreibbar. Der Hydromotor 2 ist über eine erste Arbeitsleitung 11 an die Hydropumpe 1 und über eine zweite Arbeitsleitung 12 sowie über eine Leckölleitung 13 an den Tank 10 angeschlossen. Er ist mit einem nicht gezeigten Schaltgetriebe zwecks Antrieb der ebenfalls nicht gezeigten Fahrzeugräder gekoppelt.

Das Fahrtrichtungsventil 3 und das Bremsventil 6 sind in beiden Arbeitsleitungen 11,12, das erstere Ventil näher zur Hydropumpe 1 und das letztere Ventil näher zum Hydromotor 2 angeordnet. Die Leitungsabschnitte der ersten Arbeitsleitung 11 zwischen der Hydropumpe 1 und dem Fahrtrichtungsventil 3, zwischen dem Fahrtrichtungsventil 3 und dem Bremsventil 6 und zwischen dem Bremsventil 6 und dem Hydromotor 2 sind mit den Bezugszeichen 11,14; 11,15 und 11,16 und die entsprechenden Leitungsabschnitte der zweiten Arbeitsleitung 12 mit den Bezugszeichen 12,17; 12,18 und 12,19 bezeichnet.

Das Fahrtrichtungsventil 3 ist ein willkürlich betätigbares 6/3-Wegeventil mit den Schaltstellungen: Vorwärtsfahrt, Leerlauf und Rückwärtsfahrt. Es weist dementsprechend je einen Anschluß an die Arbeitsleitungsabschnitte 11,14; 11,15; 12,17 und 12,18 sowie zwei weitere Anschlüsse auf, deren einer pumpenseitig über ein Leitungsstück 20 an den Arbeitsleitungsabschnitt 11,14 und motorseitig über ein Leitungsstück 21 an den Arbeitsleitungsabschnitt 12,17 angeschlossen ist.

In der in der Zeichnung gezeigten Leerlaufstellung des Fahrtrichtungsventils 3 sind die beiden Anschlüsse an die Leitungsstücke 20 und 21 sowie die beiden motorseitigen Anschlüsse an die Arbeitsleitungsabschnitte 11,15 und 12,18 jeweils miteinander verbunden, während die verbleibenden zwei Anschlüsse gesperrt sind. In dieser Leerlaufstellung fördert die Hydropumpe 1 in den Tank 10, während der Hydromotor 2 auf Umlauf geschaltet ist.

In der in der Zeichnung oberen Schaltstellung, d.h. bei nach unten verschobenem Kolben des Fahrtrichtungsventils 3, ist die Verbindung zwischen den beiden Anschlüssen an die Arbeitsleitungsabschnitte 11,14 und 11,15 sowie zwischen den Anschlüssen an die Arbeitsleitungsabschnitte 12,17 und 12,18 hergestellt, während die beiden verbleibenden Anschlüsse gesperrt sind. Diese obere Schaltstellung des Fahrtrichtungsventils 3 entspricht der Vorwärtsfahrt des Fahrzeugs; der Druckmittelvorlauf von der Hydropumpe 1 zum Hydromotor 2 erfolgt über die erste Arbeitsleitung 11 und der Druckmittelrücklauf zum Tank 10 über die zweite Arbeitsleitung 12.

In der in der Zeichnung unteren Schaltstellung des Fahrtrichtungsventils 3 sind die Verbindungen der in der oberen Schaltstellung offenen Anschlüsse miteinander vertauscht, so daß das Fahrzeug auf Rückwärtsfahrt eingestellt ist. Dementsprechend erfolgt der Druckmittelvorlauf über die Arbeitsleitungsabschnitte 11,14; 12,18 und 12,19 und der Rücklauf über die Arbeitsleitungsabschnitte 11,16; 11,15 und 12,17.

Das Bremsventil 6 ist ein stetig verstellbares 4/3/Wegeventil, dessen Steuerkolben 22 durch Federzentrierung in der in der Zeichnung gezeigten Mittel- oder Bremsstellung gehalten und durch hydraulische Beaufschlagung in Richtung einer in der Zeichnung unteren und oberen Endstellung verstellbar ist. Die hydraulische Beaufschlagung erfolgt an beiden Stirnseiten des Steuerkolbens 22 über je eine an die Arbeitsleitungsabschnitte 11,15 bzw. 12,18 angeschlossene Steuerleitung 23 bzw. 24. Das Bremsventil 6 umfaßt je einen Anschluß an die Arbeitsleitungsabschnitte 11,15; 11,16; 12,18 und 12,19 sowie acht Durchflußkanäle 25 bis 32. Die Durchflußkanäle 27 und 30 weisen je einen gegenüber den Arbeitsleitungen 11,12 sowie den verbleibenden Durchflußkanälen verringerten, drosselnden Querschnitt auf. In den Durch - flußkanälen 25,28,29 und 32 ist je ein in Richtung Hydropumpe 1 sperrendes Rückschlagventil angeordnet, während die verbleibenden Durchflußkanäle in beiden Richtungen durchströmbar sind. In der Bremsstellung des Bremsventils 6 stehen die beiden Anschlüsse an die Arbeitsleitungsabschnitte 11,15 und 11,16 über die Durchflußkanäle 27 und 28 in Verbindung, während die beiden Anschlüsse an die Arbeitsleitungsabschnitte 12,18 und 12,19 über die Durchflußkanäle 29 und 30 miteinander verbunden sind. Die gleichen Anschlüsse stehen in der unteren Endstellung des Bremsventils 6 über die Durchflußkanäle 25 bzw. 26 und in der oberen Endstellung über die Durchflußkanäle 31 bzw. 32 in Verbindung.

Die einstellbaren Druckbegrenzungsventile 7,8 sind in einer die Arbeitsleitungsabschnitte 11,16 und 12,19 verbindenden Leitung 33 angeordnet. Zwei in entgegengesetzten Richtungen sperrende Rückschlagventile 34 bzw. 35 sind in je einem die Druckbegrenzungsventile 7,8 umgehenden Bypaß angeordnet.

Die Stelleinrichtung 4 besteht aus einem doppeltwirkenden Stellzylinder mit einem Differentialkolben 36, der über eine Kolbenstange 37 mit einem Stellglied 38 zur Verstellung des Verdrängungsvolumens des Hydromotors 2 gekoppelt ist und mit seiner kleineren, ringförmigen Stirnfläche einen von der Kolbenstange 37 durchsetzten ersten Druckraum 39 sowie mit seiner gegenüberliegenden, größeren, kreisförmigen Stirnfläche einen zweiten Druckraum 40 definiert. Der erste Druckraum 39 ist über eine Stelldruckzweigleitung 41 an eine erste Stelldruckleitung 42 angeschlossen, die von einem über zwei Stelldruckanschlußleitungen 43,44 an die Arbeitsleitungsabschnitte 11,15 und 12,18 angeschlossenen Wechselventil 45 über das Regelventil 5 zum zweiten Druckraum 40 der Stelleinrichtung 4 führt. In der ersten Stelldruckleitung 42 ist zwischen der Abzweigung der Stelldruckzweigleitung 41 und dem Wechselventil 45 ein in dessen Richtung sperrendes Rückschlagventil 46 angeordnet.

Das Regelventil 5.1,5.2 ist ein stetig verstellbares 3/2-Wegeventil mit zwei Anschlüssen P und S an die zum Wechselventil 45 bzw. zum Druckraum 40 führenden Leitungsabschnitte 47 bzw. 48 der ersten Stelldruckleitung 42 und einem Anschluß T, der über ein Leitungsstück 49 in die Leckölleitung 13 einmündet und auf diese Weise zum Tank 10 führt. Das Regelventil 5.1,5.2 ist durch die Kraft einer einstellbaren Feder 50 in der in der Zeichnung gezeigten (linken) Ausgangsstellung gehalten und durch einen von der ersten Stelldruckleitung 42 über eine Stelldruckzweigleitung 51 abgenommenen Regeldruck gegen die Kraft der Feder 50 in Richtung (rechte) Endstellung ansteuerbar. In der Ausgangsstellung des Regelventils 5.1,5.2 ist der Anschluß P an den Stelldruckleitungsabschnitt 42,47 gesperrt, während die beiden verbleibenden Anschlüsse S und T miteinander verbunden sind. Im Regelbereich, d.h. in sämtlichen Regelstellungen einschließlich der Endstellung sind die Anschlüsse P und S des Regelventils 5.1 offen und über einen Durchflußkanal 52 mit dem Tankanschluß T verbunden, während beim Regelventil 5.2 der Tankanschluß T gesperrt ist und die verbleibenden Anschlüsse P und S offen sind.

Eine zweite Stelldruckleitung 53 ist über zwei Stelldruckanschlußleitungen 54,55 an die Arbeitsleitungsabschnitte 11,16 und 12,19 angeschlossen und führt zum Leitungsabschnitt 47 der ersten Stelldruckleitung 42. In den Stelldruckanschlußleitungen 54,55 ist je ein in Richtung der Arbeitsleitungsabschnitte 11,16 und 12,19 sperrendes Rückschlagventil 56,57 angeordnet.

Das hydrostatische Getriebe umfaßt eine Drosseleinrichtung 58, die aus einer Zulaufdrossel 59 in der zweiten Stelldruckleitung 53 und einer Ablaufdrossel in einem Ablauf der ersten Stelldruckleitung 42 in deren Teilbereich zwischen dem Rückschlagventil 46 und der Stelleinrichtung 4 besteht. Der Drosselquerschnitt der Zulaufdrossel 59 ist im Ausführungsbeispiel konstant, kann jedoch auch verstellbar sein. Die Ablaufdrossel ist in den Ausführungsbeispielen nach den Fig. 1 bis 4 unterschiedlich ausgebildet bzw. unterschiedlich angeordnet und dementsprechend mit den Bezugszeichen 60.1 bis 60.4 bezeichnet.

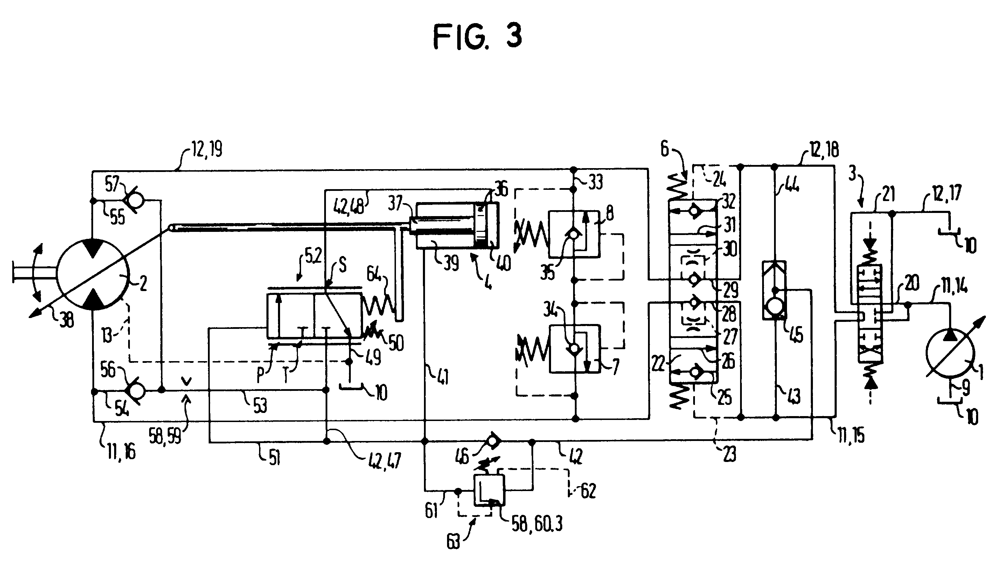

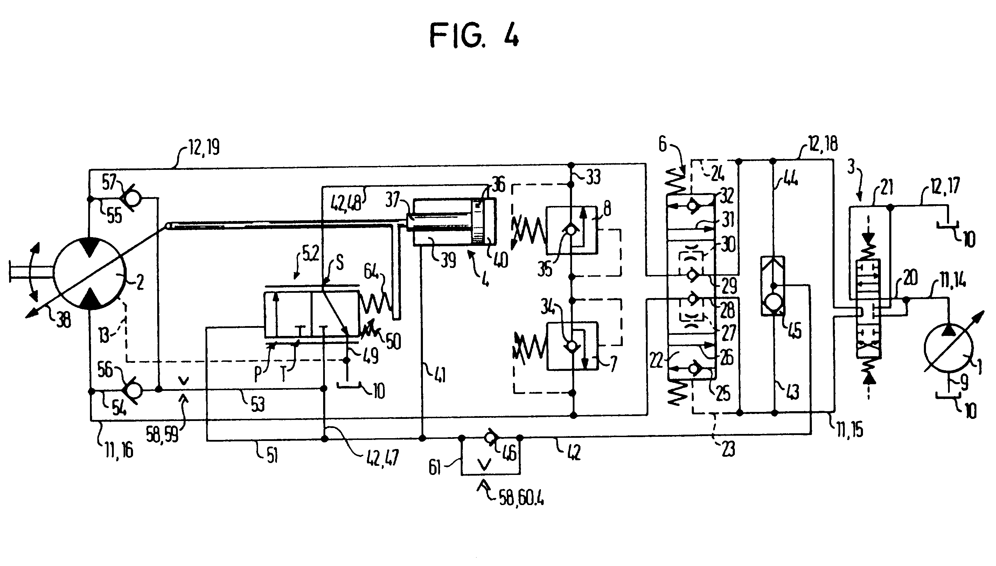

Die Ablaufdrossel 60.1 nach Figur 1 ist in dem zum Tank 10 hin ablaufenden Durchflußkanal 52 des Regelventils 5.1 angeordnet, während sich die Ablaufdrossel 60.2 nach Figur 2 in Form eines verstellbaren Drosselventils in einer das Rückschlagventil 46 in der ersten Stelldruckleitung 42 umgebenden Bypaß-Leitung 61 als Ablauf befindet. GemäB Figur 3 ist in der Bypaß-Leitung 61 ein über eine Steuerdruckleitung 62 ansteuerbares Druckbegrenzungsventil 63 angeordnet, dessen verstellbarer Drosselquerschnitt die Ablaufdrossel 60.3 darstellt. Die Ablaufdrossel 60.4 nach Figur 4 ist als Drosselstelle mit konstantem Drosselquerschnitt in der Bypaß-Leitung 61 ausgebildet.

Zusätzlich sind die hydrostatischen Getriebe nach den Figuren 3 und 4 mit einer mit der Kolbenstange 37 der Stelleinrichtung 4 gekoppelten Wegmeßfeder 64 versehen, die das Regelventil 5.2 in Richtung der in der Zeichnung dargestellten Ausgangsstellung beaufschlagt.

Die Funktion des erfindungsgemäßen hydrostatischen Getriebes nach den Figuren 1 und 2 ist wie folgt:
Bei stehendem Fahrzeug befinden sich das Fahrtrichtungsventil 3 und das Bremsventil 6 in ihrer jeweiligen Mittelstellung, so daß die angetriebene Hydropumpe 1 über die Leitungsstücke 20,21 in den Tank 10 fördert und der Hydromotor 2 dementsprechend nicht angetrieben wird. Die Arbeitsleitungsabschnitte 11,15; 11,16; 12,18 und 12,19 und damit auch die erste Stelldruckleitung 42 und die Stelldruckzweigleitung 51 sind drucklos, so daß sich das Regelventil 5.1,5.2 unter der Wirkung der Feder 50 in seiner Ausgangsstellung befindet, in der der Druckraum 40 der Stelleinrichtung 4 zum Tank 10 hin entlastet ist. Der Differentialkolben 36 nimmt die in den Figuren 1 bis 4 gezeigte rechte Endstellung ein, die dem Minimum-Verdrängungsvolumen des Hydromotors 2 entspricht.

Nach Umschalten des Fahrtrichtungsventils 3 in die obere Schaltstellung fördert die Hydropumpe 1 in die als Vorlaufleitung dienende erste Arbeitsleitung 11. Der sich dabei im Arbeitsleitungsabschnitt 11,15 aufbauende Arbeitsdruck wirkt über das Wechselventil 45, die erste Stelldruckleitung 42 mit geöffnetem Rückschlagventil 46 - bei geschlossenen Rückschlagventilen 56,57 in den Stelldruckanschlußleitungen 54,55 - und die Stelldruckzweigleitung 51 als Regeldruck auf das Regelventil 5.1,5.2 und verschiebt dieses in Richtung Endstellung, sobald die hydraulische Kraft des Regeldrucks die Kraft der Feder 50 übersteigt, d.h. sobald der Regelpunkt erreicht ist. Das Regelventil 5.1,5.2 nimmt eine der Größe des Regeldrucks entsprechende Regelstellung ein und stellt die Verbindung zwischen den Stelldruckleitungsabschnitten 42,47 und 42,48 her, so daß das Druckmittel im Arbeitsleitungsabschnitt 11,15 als Stelldruckmittel in den Druckraum 40 einströmt und bei ausreichendem Druck den Differentialkolben 36 in Richtung seiner linken Endstellung verschiebt, die dem maximalen Verdrängungsvolumen des Hydromotors 2 entspricht. Der im Arbeitsleitungsabschnitt 11,15 herrschende Arbeitsdruck wirkt gleichzeitig über die Steuerleitung 23 auf den Steuerkolben 22 des Bremsventils 6 und verschiebt diesen in die untere Endstellung, so daß das von der Hydropumpe 1 geförderte Druckmittel über den Durchflußkanal 25 im Bremsventil 6 zum Hydromotor 2 strömt und diesen antreibt. Auf diese Weise beginnt das Fahrzeug vorwärts zu fahren. Der Druckmittelrücklauf zum Tank 10 erfolgt ungedrosselt über den Arbeitsleitungsabschnitt 12,19, den Durchflußkanal 26 im Bremsventil 6 und die Arbeitsleitungsabschnitte 12,18 und 12,17. Da der Arbeitsdruck beim Anfahren des Fahrzeugs, d.h. beim Beschleunigen, größer als bei nicht beschleunigter Fahrt ist, nehmen das Regelventil 5.1,5.2 und damit der Differentialkolben 36 ihre jeweilige Endstellung ein, so daß der Hydromotor 2 auf maximales Verdrängungsvolumen ausgeschwenkt ist. Mit abnehmendem Arbeitsdruck bei nicht beschleunigter Fahrt wird durch entsprechendes Zurückstellen des Regelventils 5.1,5.2 und des Differentialkolbens 36 in eine entsprechende Zwischenstellung der Hydromotor 2 auf ein entsprechend verringertes Verdrängungsvolumen zurückgeschwenkt.

Die soeben beschriebenen Vorgänge laufen ebenfalls bei Rückwärtsfahrt des Fahrzeugs lediglich mit dem Unterschied ab, daß das Fahrtrichtungsventil 3 die untere Schaltstellung und das Bremsventil 6 die obere Endstellung einnehmen und der Arbeitsdruck in der nun als Vorlaufleitung dienenden zweiten Arbeitsleitung 12 herrscht, während der Druckmittelrücklauf über die erste Arbeitsleitung 11 erfolgt.

Bei Überschreitung des jeweils an den Druckbegrenzungsventilen 7,8 eingestellten Wertes wird der Druck im jeweils höher belasteten Arbeitsleitungsabschnitt 11,16; 12,19 über das Druckbegrenzungsventil 7 bzw. 8 zum jeweils anderen Arbeitsleitungsabschnitt 12,19 bzw. 11,16 hin entlastet.

Sobald das Fahrzeug vom vorstehend beschriebenen Lastbetrieb in den Schubbetrieb wechselt, wenn also der Antrieb des Hydromotors 2 nicht durch die Hydropumpe 1 erfolgt, sondern von den Fahrzeugrädern übernommen wird, etwa bei Bergabfahrt oder bei Leerlauf des Dieselmotors, fällt der Arbeitsdruck in der jeweils als Vorlaufleitung dienenden Arbeitsleitung 11 (bei Vorwärtsfahrt) bzw. 12 (bei Rückwärtsfahrt) und damit auch in der Steuerleitung 23 bzw. 24 ab. Das auf diese Weise hydraulisch druckentlastete Bremsventil 6 nimmt unter der Wirkung seiner Federzentrierung die Bremsstellung ein. In dieser Stellung fördert der von den Fahrzeugrädern angetriebene, als Pumpe wirkende Hydromotor 2 das über die jeweilige Vorlaufleitung 11 (bei Vorwärtsfahrt) bzw. 12 (bei Rückwärtsfahrt) einschließlich des Durchflußkanals 28 bzw. 29 angesaugte Druckmittel über die jeweils als Rücklaufleitung dienende Arbeitsleitung 12 (bei Vorwärtsfahrt) bzw. 11 (bei Rückwärtsfahrt) einschließlich des jeweiligen Durchflußkanals 30 bzw. 27 im Bremsventil 6 zum Tank 10. Dabei baut sich im jeweiligen Arbeitsleitungsabschnitt 12,19 bzw. 11,16 ein der Drosselwirkung des jeweiligen Durchflußkanals 30 bzw. 27 entsprechender Staudruck auf, der den Hydromotor 2 abbremst. Da das Druckmittel nach dem drosselnden Durchflußkanal 30 bzw. 27 nahezu drucklos über den Arbeitsleitungsabschnitt 12,18 bzw. 11,15 zum Tank 10 abströmt, sind die Steuerleitung 24 bzw. 23 sowie die erste Stelldruckleitung 42 und die Stelldruckzweigleitung 51 ebenfalls drucklos. Auf diese Weise bleibt nicht nur das Bremsventil 6 während der Dauer des Schubbetriebs in der Bremsstellung, sondern es entfällt auch die während des Lastbetriebs des hydrostatischen Getriebes den Rückschwenkkräften des Triebwerks des Hydromotors 2 entgegenwirkende Druckmittelbeaufschlagung des Regelventils 5.1,5.2 und des Differentialkolbens 36 über das Wechselventil 45. Stattdessen wirkt der Staudruck im Rücklaufleitungsabschnitt 12,19 (bei Vorwärtsfahrt) oder 11,16 (bei Rückwärtsfahrt) über die Stelldruckanschlußleitung 55 bzw. 54 - bei geöffnetem Rückschlagventil 57 bzw. 56 - und die in den Leitungsabschnitt 42,47 der ersten Stelldruckleitung 42 einmündende zweite Stelldruckleitung 53 in der vorbeschriebenen Weise auf das Regelventil 5.1,5.2 und verstellt bei Erreichen des Regelpunktes den Differentialkolben 36 in der ebenfalls vorbeschriebenen Weise in Richtung der jeweiligen Endstellung, d.h. in Richtung des maximalen Verdrängungsvolumens des Hydromotors 2. Dieser erzeugt einen entsprechend größeren Druckmittelstrom, der beim Durchgang durch den drosselnden Durchflußkanal 30 bzw. 27 einen entsprechend höheren Staudruck hervorruft. Dieser höhere Staudruck bzw. größere Druckmittelstrom wirkt wiederum über die jeweilige Stelldruckanschlußleitung 55 bzw. 54 und die in die erste Stelldruckleitung 42 einmündende zweite Stelldruckleitung 53 auf das Regelventil 5.1,5.2 und die Stelleinrichtung 4 zurück und bewirkt ein weiteres Ausschwenken des Hydromotors 2, bis dieser schließlich auf sein maximales Verdrängungsvolumen eingeregelt ist und einen maximalen Bremsdruck und damit ein maximales Bremsmoment an den Fahrzeugrädern erzeugt.

Während dieses soeben beschriebenen Regelvorganges ist das Rückschlagventil 46 in der ersten Stelldruckleitung 42 geschlossen. Über die Ablaufdrossel 60.1 im Regelventil 5.1 bzw. die Ablaufdrossel 60.2 in der Bypaß-Leitung 61 strömt ein der Höhe des Stelldrucks und der Drosselwirkung der jeweiligen Ablaufdrossel entsprechender Anteil des Stelldruckmittels in der zweiten Stelldruckleitung 53 zum Tank 10 hin ab. Durch diese Strömung wird die Zulaufdrossel 59 in Funktion gesetzt, die daraufhin die Druckmittelbeaufschlagung des Regelventiles 5.1,5.2 sowie der Stelleinrichtung 4 verzögert und dämpft. Auf diese Weise wird nicht nur ein zu schneller Aufbau des Staudrucks im jeweiligen Arbeitsabschnitt 11,16 bzw. 12,19, sondern insbesondere ein ungedämpftes Durchschlagen von Bremsdruckschwankungen, hervorgerufen durch z.B. Schwankungen der Fahrwiderstände oder der abgenommenen Leistung, auf das Regelventil 5.1,5.2 und die Stelleinrichtung 4 verhindert. Außerdem bewirkt die Ablaufdrossel 60.1,60.2 durch Verringerung des für die Verstellung des Differentialkolbens 36 in Richtung Endstellung zur Verfügung stehenden Volumenstroms des Stelldruckmittels und Verringerung des Stell- bzw. Regeldrucks für die Verstellung des Regelventils 5.1,5.2 in Richtung Endstellung einen zusätzlich verzögerten Aufbau des Staudrucks. Der Bremsvorgang setzt entsprechend sanft ein und wird mit nahezu konstantem und hohem Bremsdruck durchgeführt. Im Lastbetrieb hingegen erfolgt die Druckmittelbeaufschlagung des Regelventiles 5.1,5.2 sowie der Stelleinrichtung 4 unverzögert und ungedämpft über die erste Stelldruckleitung 42, so daß jede Änderung des Arbeitsdrucks im jeweiligen Arbeitsleitungsabschnitt 12,18 bzw. 11,15 eine sofortige Verstellung des Verdrängungsvolumens des Hydromotors 2 zur Folge hat.

Im Gegensatz zur Ablaufdrossel 60.1 bietet die Ablaufdrossel 60.2 die Möglichkeit, durch entsprechende Verstellung ihres Drosselquerschnitts den für die Verstellung des Differentialkolbens 36 in Richtung Endstellung zur Verfügung stehenden Volumenstrom des Stelldruckmittels sowie den Stell- bzw. Regeldruck für die Verstellung des Regelventils 5.2 in Richtung Endstellung auf jeden gewünschten Wert einzustellen bzw. entlang jeder gewünschten Kurve zu verändern und auf diese Weise den Bremsvorgang gezielt zu beeinflussen. Beispielsweise werden mit steigender Drosselwirkung der Ablaufdrossel 60.2 das Regelventil 5.2 und die Stelleinrichtung 4 zunehmend in Richtung der bzw. schneller bis in die Endstellung mit der Folge verstellt, daß der Hydromotor 2 dementsprechend schneller bis auf maximales Verdrängungsvolumen ausgeschwenkt wird. Die Ablaufdrossel 60.2 kann manuell oder beispielsweise programmgesteuert bzw. in Abhängigkeit von bestimmten Parametern, wie etwa Verdrängungsvolumen-Einstellung und/oder Drehzahl des Hydromotors 2 und/oder Höhe des Staudrucks, verstellt werden.

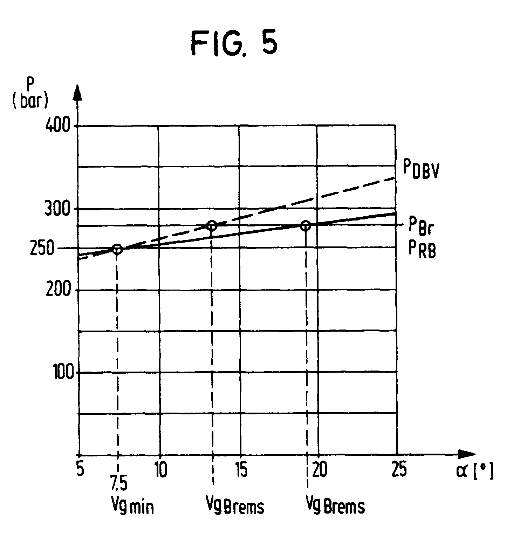

Das hydrostatische Getriebe nach Figur 3 unterscheidet sich hinsichtlich seiner Funktion von demjenigen nach Figur 2 lediglich dadurch, daß der Hydromotor 2 im Schubbetrieb nicht auf sein maximales, sondern entsprechend der Federrate der Wegmeßfeder 64 auf ein kleineres Verdrängungsvolumen ausgeschwenkt wird. Sobald der Stell- bzw. Regeldruck in der zweiten Stelldruckleitung 53 den Einstelldruck der Feder 50 am Regelventil 5.2 überschreitet, wird letzteres in Richtung Endstellung verstellt und dementsprechend der Differentialkolben 36 der Stelleinrichtung 4 unter zunehmender Belastung der Wegmeßfeder 64 ebenfalls in Richtung Endstellung verschoben. Sobald die Federkräfte der Feder 50 und der Wegmeßfeder 64 größer als die hydraulische Kraft des Regeldruckes sind, wird das Regelventil 5.2 und damit der Differentialkolben 36 in Richtung Ausgangsstellung verstellt und dementsprechend der Hydromotor 2 in Richtung minimales Verdrängungsvolumen, d.h. auf einen kleineren Schwenkwinkel, zurückgeschwenkt, um dann, wenn am Regelventil 5.2 wiederum Kraftungleichgewicht zugunsten des Regeldrucks herrscht, durch entsprechende Verstellung des Differentialkolbens 36 erneut in Richtung maximales Verdrängungsvolumen ausgeschwenkt zu werden. Die Wegmeßfeder 64 wird wiederum gespannt und der vorbeschriebene Regelvorgang wiederholt sich, wobei der Differentialkolben 36 in einer Zwischenstellung und damit der Hydromotor 2 auf einer entsprechenden Verdrängungsvolumen-Einstellung gehalten wird. Wenn beispielsweise der Regelbeginn des Regelventils 5.2 entsprechend der Einstellkraft der Feder 50 auf einen Druck p_{RB} von 250 bar festgelegt und das Druckbegrenzungsventil 63 auf einen Druck p_{Br} von 280 bar eingestellt ist, ergibt sich nach Fig. 5 für den Hydromotor 2 entsprechend der mit durchgezogener Linie dargestellten Federkennlinie der Wegmeßfeder 64 (Δp = 50 bar) ein Schwenkwinkel von 19,5^{o} und entsprechend der mit gestrichelter Linie dargestellten Federkennlinie der Wegmeßfeder 64 (Δ p = 100 bar) ein Schwenkwinkel von 13.5^{o}. Eine derartige Einstellung des Hydromotors 2 auf ein gegenüber dem maximal möglichen Verdrängungsvolumen geringeres Verdrängungsvolumen ist dann erforderlich, wenn das Fahrzeug beispielsweise bei Bergabfahrt nicht bis zum Stillstand verzögert werden soll.

Das hydrostatische Getriebe nach Figur 4 unterscheidet sich bei ansonsten gleicher Konstruktion und Funktion von demjenigen nach Figur 3 lediglich dadurch, daß der Stelldruck in der zweiten Stelldruckleitung 53 und damit der Regeldruck entsprechend dem konstanten Drosselquerschnitt der Ablaufdrossel 60.4 auf einen konstanten Wert eingestellt ist.

## Patentansprüche

1. Reversierbares hydrostatisches Getriebe,
- mit wenigstens einer Hydropumpe (1) und wenigstens einem verstellbaren Hydromotor (2), der an zwei Arbeitsleitungen (11,12) angeschlossen ist, von denen wenigstens eine zur Hydropumpe führt und dessen Stellglied (38) zur Verstellung seines Verdrängungsvolumens mit einer Stelleinrichtung (4) verbunden ist, die durch einen Stelldruck in einer an die Arbeitsleitungen angeschlossenen Stelldruckleitung (42) in Richtung des maximalen Verdrängungsvolumens des Hydromotors beaufschlagbar ist, und
- mit einem Bremsventil (6), das zwischen dem Hydromotor und den Anschlüssen (43,44) der Stelldruckleitung an die Arbeitsleitungen in letzteren angeordnet ist und bei Schubbetrieb des hydrostatischen Getriebes den Querschnitt jeweils einer der Arbeitsleitungen zumindest teilweise schließt,
**dadurch gekennzeichnet**,
daß die Stelldruckversorgung der Stelleinrichtung (4) im Lastbetrieb des hydrostatischen Getriebes verzögerungsfrei über die Stelldruckleitung (42) und im Schubbetrieb mittels einer Drosseleinrichtung (58) verzögert über eine weitere Stelldruckleitung (53) erfolgt, die im Bereich zwischen dem Bremsventil (6) und dem Hydromotor (2) an die Arbeitsleitungen (11,12) über eine in Richtung derselben sperrende Rückschlagventilanordnung (56,57) angeschlossen ist.

2. Hydrostatisches Getriebe nach Anspruch 1,
**dadurch gekennzeichnet**,
daß die weitere, zweite Stelldruckleitung (53) in die vorgenannte, erste Stelldruckleitung (42) einmündet.

3. Hydrostatisches Getriebe nach Anspruch 2,
**gekennzeichnet durch** ein Rückschlagventil (46), das in der ersten Stelldruckleitung (42) zwischen deren Anschlüssen (43,44) an die Arbeitsleitungen (11,15; 12,18) und der Einmündung der zweiten Stelldruckleitung (53) angeordnet ist und in Richtung dieser Einmündung öffnet.

4. Hydrostatisches Getriebe nach Anspruch 3,
**dadurch gekennzeichnet**,
daß die Drosseleinrichtung (58) dem Stelldruckleitungsbereich bestehend aus der zweiten Stelldruckleitung (53) und dem Teilbereich der ersten Stelldruckleitung (42) zwischen dem Rückschlagventil (46) und der Stelleinrichtung (4) zugeordnet ist.

5. Hydrostatisches Getriebe nach wenigstens einem vorhergehenden Anspruch,
**dadurch gekennzeichnet**,
daß die Drosseleinrichtung (58) eine Zulaufdrossel (59) in der zweiten Stelldruckleitung (53) umfaßt.

6. Hydrostatisches Getriebe nach Anspruch 4 oder 5,
**dadurch gekennzeichnet**,
daß die Drosseleinrichtung (58) eine Ablaufdrossel (60.1 bis 60.4) in einem Ablauf (52,T; 61,42) der ersten Stelldruckleitung (42) in deren Teilbereich zwischen dem Rückschlagventil (46) und der Stelleinrichtung (4) umfaßt.

7. Hydrostatisches Getriebe nach Anspruch 5 und/oder 6,
**dadurch gekennzeichnet**,
daß die Zulaufdrossel (59) und/oder die Ablaufdrossel (60.2,60.3) als verstellbare Drossel ausgebildet sind/ist.

8. Hydrostatisches Getriebe nach Anspruch 6 oder 7,
**dadurch gekennzeichnet**,
daß der Ablauf (61,42) eine das Rückschlagventil (46) umgehende, zur ersten Stelldruckleitung (42) parallele Bypaß-Leitung (61) umfaßt, in der die Ablaufdrossel (60.2 bis 60.4) angeordnet ist.

9. Hydrostatisches Getriebe nach wenigstens einem der Ansprüche 6 bis 8,
**dadurch gekennzeichnet**,
daß die Ablaufdrossel (60.3) den Drosselquerschnitt eines im Ablauf (61) angeordneten Druckbegrenzungsventils (63) darstellt.

10. Hydrostatisches Getriebe nach Anspruch 9,
**dadurch gekennzeichnet**,
daß das Druckbegrenzungsventil (63) über eine Steuerdruckleitung (62) ansteuerbar ist.

11. Hydrostatisches Getriebe nach Anspruch 6 oder 7,
**dadurch gekennzeichnet**,
daß der Ablauf (52,T) einen Durchflußkanal (52) umfaßt, in dem die Ablaufdrossel (60.1) angeordnet ist und der in einem in der ersten Stelldruckleitung (42) angeordneten Regelventil (5.1) dessen Tankanschluß (T) mit dessen Anschlüssen (P,S) an die erste Stelldruckleitung (42) verbindet.

12. Hydrostatisches Getriebe nach wenigstens einem vorhergehenden Anspruch, mit einem Regelventil (5.1,5.2), das durch den Stelldruck gegen einen Gegendruck in Richtung einer Regelstellung verstellbar ist und in dieser Regelstellung die Stelldruckbeaufschlagung der Stelleinrichtung (4) in Richtung des maximalen Verdrängungsvolumens des Hydromotors (2) regelt,
**dadurch gekennzeichnet**,
daß der Gegendruck den Druck einer mit der Stelleinrichtung (4) gekoppelten Wegmeßfeder (64) umfaßt, deren Belastung mit zunehmender Verstellung der Stelleinrichtung (4) in Richtung maximalen Verdrängungsvolumens des Hydromotors (2) ansteigt.

## Claims

1. Reversible hydrostatic transmission,
- having at least one hydraulic pump (1) and at least one adjustable hydraulic motor (2) which is connected to two working lines (11,12) of which at least one leads to the hydraulic pump, and the setting member (38) of the hydraulic motor, for adjusting its displacement volume, is connected with a setting device (4) which can be acted upon by means of a setting pressure, in a setting pressure line (42) connected to the working lines, in the direction of the maximum displacement volume of the hydraulic motor, and
- having a brake valve (6) which is arranged in the working lines between the hydraulic motor and the connections (43,44) of the setting pressure line to the working lines and which, upon overrun operation of the hydrostatic transmission, at least partially closes the cross-section in each case of one of the working lines,
characterized in that,
the setting pressure supply of the setting device (4) in load operation of the hydrostatic transmission is effected without delay via the setting pressure line (42) and in overrun operation is effected with delay, by means of a throttle device (58), via a further setting pressure line (53) which is connected to the working lines (11,12) in the region between the brake valve (6) and the hydraulic motor (2) by way of a non-return valve arrangement (56,57) blocking in the direction of the working lines.

2. Hydrostatic transmission according to claim 1,
characterized in that,
the further, second setting pressure line (53) has a mouth opening into the above-mentioned, first setting pressure line (42) .

3. Hydrostatic transmission according to claim 2,
characterized by a non-return valve (46) which is arranged in the first setting pressure line (42) between its connections (43,44) to the working lines (11,15; 12,18) and the mouth of the second setting pressure line (53), and opens in the direction of this mouth.

4. Hydrostatic transmission according to claim 3,
characterized in that,
the throttle device (58) is associated with the setting pressure line region consisting of the second setting pressure line (53) and the portion of the first setting pressure line (42) between the non-return valve (46) and the setting device (4) .

5. Hydrostatic transmission according to any preceding claim,
characterized in that,
the throttle device (58) includes a feed throttle (59) in the second setting pressure line (53).

6. Hydrostatic transmission according to claim 4 or 5,
characterized in that,
the throttle device (58) includes a discharge throttle (60.1 to 60.4) in a discharge (52,T;61,42) of the first setting pressure line (42) in the portion thereof between the non-return valve (46) and the setting device (4) .

7. Hydrostatic transmission according to claim 5 and/or 6,
characterized in that,
the feed throttle (59) and/or the discharge throttle (60.2,60.3) is or are formed as adjustable throttles.

8. Hydrostatic transmission according to claim 6 or 7,
characterized in that,
the discharge (61,42) includes a bypass line (61), bypassing the non-return valve (46), parallel to the first setting pressure line (42), in which bypass line the discharge throttle (60.2 to 60.4) is arranged.

9. Hydrostatic transmission according to any of claims 6 to 8,
characterized in that,
the discharge throttle (60.3) represents the throttle cross-section of a pressure limiting valve (63) arranged in the discharge (61).

10. Hydrostatic transmission according to claim 9,
characterized in that,
the pressure limiting valve (63) is controllable by way of a control pressure line (62).

11. Hydrostatic transmission according to claim 6 or 7,
characterized in that,
the discharge (52,T) includes a through-flow channel (52) in which the discharge throttle (60.1) is arranged and which, in a control valve (5.1) arranged in the first setting pressure line (42), connects the tank port (T) of the control valve with its ports (P,S) to the first setting pressure line (42).

12. Hydrostatic transmission according to any preceding claim, having a control valve (5.1,5.2) which is adjustable by means of a setting pressure against a counter-pressure in the direction of a control position and in this control position controls the setting pressure action on the setting device (4) in the direction of the maximum displacement volume of the hydraulic motor (2),
characterized in that,
the counter-pressure includes the pressure of a travel measurement spring (64) coupled with the setting device (4), the loading of which spring increases with increasing displacement of the setting device (4) in the direction of maximum displacement volume of the hydraulic motor (2).

## Revendications

1. Transmission hydrostatique réversible,
- comportant au moins une pompe hydraulique (1) et au moins un moteur hydraulique (2) réglable, qui est raccordé à deux conduites de travail (11,12), dont une au moins mène à la pompe hydraulique et dont l'organe de réglage (38) est relié, pour le réglage de son volume de déplacement, à un dispositif de réglage (4), qui peut être sollicité par une pression de réglage dans une conduite de pression de réglage (42), raccordée aux conduites de travail, en direction du volume de déplacement maximal du moteur hydraulique, et
- comportant une soupape de freinage (6), qui est placée dans les conduites de travail, entre le moteur hydraulique et les raccords (43, 44) de la conduite de pression de réglage aux conduites de travail, et qui, en fonctionnement de poussée de la transmission hydrostatique, ferme au moins partiellement la section de l'une des conduites de travail,
caractérisé en ce que l'alimentation en pression de réglage du dispositif de réglage (4) s'effectue, en fonctionnement sous charge de la transmission hydrostatique, sans délai par la conduite de pression de travail (42), et en fonctionnement de poussée, s'effectue au moyen d'un dispositif d'étranglement (58), de manière temporisée, par une autre conduite de pression de réglage (53), qui est raccordée, dans la zone comprise entre la soupape de freinage (6) et le moteur hydraulique (2), aux conduites de travail (11,12), par un dispositif à clapet de non-retour (56, 57), fermant le passage en direction de celles-ci.

2. Transmission hydrostatique selon la revendication 1, caractérisée en ce que l'autre seconde conduite de pression de réglage (53) débouche dans ladite première conduite de pression de réglage (42).

3. Transmission hydrostatique selon la revendication 2, caractérisée par un clapet de non-retour (46), qui est placé dans la première conduite de pression de réglage (42), entre ses raccords (43, 44) aux conduites de pression de travail (11,15 ; 12, 18) et l'embouchure de la seconde conduite de pression de réglage (53), et s'ouvre en direction de cette embouchure.

4. Transmission hydrostatique selon la revendication 3, caractérisée en ce que le dispositif d'étranglement (58) est associé à la zone de conduite de pression de réglage, constituée de la seconde conduite de pression de réglage (53) et de la zone partielle de la première conduite de pression de réglage (42), entre le clapet de non-retour (46) et le dispositif de réglage (4).

5. Transmission hydrostatique selon l'une au moins des revendications précédentes, caractérisée en ce que le dispositif d'étranglement (58) comprend un organe d'étranglement d'entrée (59) dans la seconde conduite de pression de réglage (53).

6. Transmission hydrostatique selon la revendication 4 ou 5, caractérisée en ce que le dispositif d'étranglement (58) comporte un organe d'étranglement d'évacuation (60.1 à 60.4), dans une évacuation (50, T ; 61, 42) de la première conduite de pression de réglage (42) dans sa zone partielle, comprise entre le clapet de non-retour (46) et le dispositif de réglage (44).

7. Transmission hydrostatique selon la revendication 5 et/ou 6, caractérisée en ce que l'organe d'étranglement d'entrée (59) et/ou l'organe d'étranglement d'évacuation (60.2, 60.3) sont/est configuré(s) en organe d'étranglement réglable.

8. Transmission hydrostatique selon la revendication 6 ou 7, caractérisée en ce que l'évacuation (61, 42) comprend une conduite de dérivation (61) entourant le clapet de non-retour (46), parallèle à la première conduite de pression de réglage (42), dans laquelle est placé l'organe d'étranglement d'évacuation (60.2 à 60.4).

9. Transmission hydrostatique selon l'une au moins des revendications 6 à 8, caractérisée en ce que l'organe d'étranglement d'évacuation (60.3) constitue la section d'étranglement d'une soupape de limitation de pression (63), placée dans l'évacuation (61).

10. Transmission hydrostatique selon la revendication 9, caractérisée en ce que la soupape de limitation de pression (63) peut être commandée par l'intermédiaire d'une conduite de pression de commande (62).

11. Transmission hydrostatique selon la revendication 6 ou 7, caractérisée en ce que l'évacuation (52, T) comprend un canal de passage (52), dans lequel est placé l'organe d'étranglement d'évacuation (60.1) et la soupape de régulation (5,1), Placée dans la première conduite de pression de réglage (42), relie son raccord de réservoir (T) avec ses raccords (P, S) à la première conduite de pression de réglage (42).

12. Transmission hydrostatique selon l'une au moins des revendications précédentes, comportant une soupape de régulation (5.1, 5.2), qui est réglable par la pression de réglage à l'encontre d'une contre-pression en direction d'une position de régulation, et qui dans cette position de régulation règle l'alimentation en pression de réglage du dispositif de réglage (4), en direction du volume de déplacement maximal du moteur hydraulique (2), caractérisée en ce que la contre-pression comprend la pression d'un ressort de mesure de distance (64), accouplé au dispositif de réglage (4), dont la charge augmente en même temps qu'augmente le réglage du dispositif de réglage (4) en direction du volume de déplacement maximal du moteur hydraulique (2).
